# EUROPEAN PATENT APPLICATION

(11) **EP 4 701 168 A1**
(43) Date of publication of application: **25.02.2026**
(21) Application number: 24883922.7
(22) Date of filing: 07.06.2024
(51) Int. Cl.: H04M 1/02, H04N 23/57

(54) **ELECTRONIC DEVICE**

(30) Priority: 31.10.2023 CN 202311438629
(71) Applicant: Huawei Technologies Co., Ltd., Shenzhen, Guangdong 518129 (CN)
(72) Inventor: YU, Junfeng, Shenzhen, Guangdong 518129 (CN); WANG, Tao, Shenzhen, Guangdong 518129 (CN)
(74) Representative: Pfenning, Meinig & Partner mbB
(86) International application number: PCT/CN2024/097970
(87) International publication number: WO 2025/091911

(57) **Abstract**

Embodiments of this application provide an electronic device, including a housing, where the housing includes a middle frame and a rear cover assembly that are connected, and the rear cover assembly includes a rear cover and a camera decoration member mounted on the rear cover; a functional device and a camera that are mounted on the camera decoration member; and a battery and a mainboard. The housing has a first accommodating cavity configured to accommodate the mainboard and a second accommodating cavity configured to accommodate the battery. A part that is of the camera decoration member and that is configured to mount the functional device extends to above the second accommodating cavity. The middle frame includes a barrier wall. The barrier wall is located between the first accommodating cavity and the second accommodating cavity, and the barrier wall supports the rear cover assembly. The part of the camera decoration member extends to above the second accommodating cavity. In this way, a length of the camera decoration member is increased, and a length of the second accommodating cavity is not reduced, which helps increase a capacity of the battery. The barrier wall supports the rear cover assembly. This reduces a risk that reliability is affected when the functional device moves toward the second accommodating cavity under an action of an external force.

## Description

This application claims priority to Chinese Patent Application No. 202311438629.X, filed with the China National Intellectual Property Administration on October 31, 2023 and entitled "ELECTRONIC DEVICE", which is incorporated herein by reference in its entirety.

### TECHNICAL FIELD

This application relates to the field of electronic devices, and in particular, to an electronic device.

### BACKGROUND

An electronic device includes components such as a housing, a battery, a screen, and a camera. The housing includes a rear cover and a middle frame, and the screen is mounted on the housing. The rear cover, the middle frame, and the screen enclose a battery compartment for accommodating the battery. Usually, devices such as a camera and a flash are mounted on the rear cover of the electronic device via a camera decoration member. The camera decoration member and the battery compartment are arranged in a length direction of the electronic device. When a length of the camera decoration member is increased, a length of the battery compartment is reduced. Consequently, a capacity of the battery is reduced, which is not conducive to improvement of a battery life.

### SUMMARY

This application provides an electronic device, which can improve reliability of an entire system while a camera decoration member and a battery are increased.

Embodiments of this application provide an electronic device. The electronic device includes a housing, where the housing includes a middle frame and a rear cover assembly, the rear cover assembly includes a rear cover and a camera decoration member mounted on the rear cover, and the middle frame is connected to the rear cover; a functional device and a camera that are mounted on the camera decoration member; and a battery and a mainboard. The housing has a first accommodating cavity configured to accommodate the mainboard and a second accommodating cavity configured to accommodate the battery. The camera decoration member includes a first mounting portion configured to mount the camera and a second mounting portion configured to mount the functional device, and the second mounting portion extends to above the second accommodating cavity. The middle frame includes a barrier wall. The barrier wall is located between the first accommodating cavity and the second accommodating cavity, and the barrier wall supports the rear cover assembly.

In this embodiment of this application, in the camera decoration member of the rear cover assembly, the second mounting portion configured to mount the functional device extends to above the second accommodating cavity in a length direction of the electronic device, so that a projection of the second mounting portion in a thickness direction of the electronic device covers a part of the second accommodating cavity configured to accommodate the battery. In this way, a length of the camera decoration member is increased, and a length of the second accommodating cavity configured to accommodate the battery is not reduced in this manner, which helps increase a capacity of the battery. The barrier wall of the middle frame extends in the thickness direction of the electronic device to support the rear cover assembly, which reduces a risk that the rear cover assembly and components (for example, a primary camera and the functional device) mounted on the rear cover assembly move toward the inside of the accommodating cavity or deform. This reduces a risk of damaging the component in the accommodating cavity. Especially, this can reduce a risk that the second mounting portion and the functional device mounted on the second mounting portion move toward the second accommodating cavity or deform. In this way, a risk of damaging the battery in the second accommodating cavity is reduced, and reliability of an entire system is improved.

In a specific embodiment, the barrier wall is bonded to the rear cover assembly. This further improves reliability that the barrier wall supports the rear cover assembly, and further reduces a risk that the rear cover assembly and the functional device mounted on the rear cover assembly move toward the battery under an action of an external force. In addition, an adhesive material that bonds the rear cover assembly and the barrier wall can further buffer an impact force between the barrier wall and the rear cover assembly.

In a specific embodiment, the barrier wall has a first end face supporting the rear cover assembly. A size of the first end face in the length direction of the electronic device is L1, and 0.5 mm ≤ L1 ≤ 1.5 mm. In this embodiment, a contact area between the barrier wall and the rear cover assembly is moderate, so that reliability that the barrier wall supports the rear cover assembly is good, and a length of the first accommodating cavity and the length of the second accommodating cavity are not significantly reduced.

In a specific embodiment, the barrier wall has a second end face disposed opposite to the first end face. The size L1 of the first end face is greater than a size L2 of the second end face in the length direction of the electronic device. In this way, an overall weight and volume of the barrier wall are reduced while the contact area between the barrier wall and the rear cover assembly is increased, which helps implement lightweight of the electronic device.

In a specific embodiment, the functional device includes a base and a body mounted on the base. The base is mounted on the camera decoration member. The rear cover assembly further includes a support member. The support member is located between the body and the rear cover, and is fastened to the base. The support member can be configured to support the functional device. This improves mounting reliability of the camera decoration member on the functional device, and reduces a risk that the functional device moves toward the second accommodating cavity in the thickness direction of the electronic device under the action of the external force. In this way, a risk that the functional device affects reliability of the battery in the second accommodating cavity is reduced.

In a specific embodiment, the support member is bonded to the base through adhesive, and a thickness of the adhesive is from 0.15 mm to 0.3 mm. In this embodiment, the adhesive can implement a fastening connection between the support member and the base, and can implement a specific buffering function. That is, the adhesive can buffer an external force between the base and the support member. This reduces the external force applied to the body of the functional device by the support member, and improves safety and a service life of the body.

In a specific embodiment, a force release portion is disposed on the camera decoration member. Rigidity of the force release portion is less than rigidity of a position that is on the camera decoration member and at which the force release portion is not disposed. That is, the force release portion is a position at which the camera decoration member is most likely to deform when the camera decoration member is subject to an external force. Therefore, when the camera decoration member is subject to an external force due to a working condition such as falling of the electronic device, a position of the force release portion first deforms under an action of the external force. Deformation of the force release portion can dissipate energy of the external force. This reduces a risk that a position other than the position of the force release portion deforms. That is, this reduces a risk that a position used to mount the functional device deforms, improves mounting reliability of the functional device, and reduces a risk, which affects reliability of the battery, that the functional device and the camera decoration member deform toward a direction of the battery.

In a specific embodiment, the force release portion is a groove disposed on the camera decoration member. A thickness of a bottom wall of the groove is less than a thickness of another position of the camera decoration member. When the camera decoration member is subject to an external force, the camera decoration member is more likely to deform at a position of the groove. This reduces a risk that a part that is of the camera decoration member and that is configured to mount the functional device deforms when the camera decoration member is subject to the external force, and further reduces a risk, which affects reliability of the battery, that the functional device mounted on the camera decoration member deforms toward the direction of the battery.

In a specific embodiment, the groove includes at least a first section extending in the length direction of the electronic device and a second section extending in a width direction of the electronic device. The first section and the second section can buffer, in two directions, the external force applied to the camera decoration member, which further reduces a risk that the second mounting portion deforms.

In a specific embodiment, a reinforcement portion is disposed on the camera decoration member. In this way, an overall structure of the camera decoration member is enhanced, which improves mounting reliability of the camera decoration member on the functional device.

In a specific embodiment, the camera decoration member includes an inner decoration member and an outer decoration member. An edge of the outer decoration member exceeds an edge of the inner decoration member in the length direction of the electronic device, and the outer decoration member extends to above the second accommodating cavity. The inner decoration member is located in the first accommodating cavity. In this embodiment, when the camera decoration member includes the outer decoration member and the inner decoration member, a length of the inner decoration member is less than a length of the outer decoration member in the length direction of the electronic device. That is, the part of the outer decoration member extends to above the first accommodating cavity in the length direction of the electronic device, and the inner decoration member does not extend toward the second accommodating cavity. In this way, space of the second accommodating cavity is not occupied. This helps increase a capacity of the battery, and helps implement a large camera and a long battery life for the electronic device.

In a specific embodiment, the outer decoration member includes a first outer decoration member and a second outer decoration member. The first outer decoration member is connected, in the thickness direction of the electronic device, to a side that is of the second outer decoration member and that is away from the rear cover. The force release portion and/or the reinforcement portion are/is disposed on the second outer decoration member. In this embodiment, the force release portion can reduce a risk that a position that is on the second outer decoration member and that is used to mount the functional device deforms. The reinforcement portion can increase overall strength of the second outer decoration member. This reduces a risk that reliability of the battery is affected when the functional device moves toward the battery under an action of an external force.

In a specific embodiment, there is a gap t between the inner decoration member and the battery in the length direction of the electronic device, and 0.4 mm ≤ t ≤ 1 mm. In this embodiment, when 0.4 mm ≤ t ≤ 1 mm, the capacity of the battery can be increased as much as possible while contact between the inner decoration member and the battery is prevented.

A second aspect of embodiments of this application provides a rear cover assembly. The rear cover assembly includes a rear cover and a camera decoration member mounted on the rear cover. The camera decoration member includes a first mounting portion configured to mount a camera and a second mounting portion configured to mount a functional device. The second mounting portion extends in a length direction and can be located above a battery of an electronic device.

In this embodiment of this application, in the camera decoration member of the rear cover assembly, the second mounting portion configured to mount the functional device extends in the length direction of the electronic device, so that a projection of the second mounting portion in a thickness direction of the electronic device covers a part of a second accommodating cavity configured to accommodate the battery. In this way, a length of the camera decoration member is increased, and a length of the second accommodating cavity configured to accommodate the battery is not reduced in this manner, which helps increase a capacity of the battery. In addition, a support member can be configured to support the functional device. This improves mounting reliability of the camera decoration member on the functional device, and reduces a risk that the functional device moves toward the second accommodating cavity in the thickness direction of the electronic device under an action of an external force. In this way, a risk that the functional device affects reliability of the battery in the second accommodating cavity is reduced.

A third aspect of this application provides a rear cover assembly. The rear cover assembly includes a rear cover and a camera decoration member mounted on the rear cover. A force release portion is disposed on the camera decoration member. Rigidity of the force release portion is less than rigidity of a position that is on the camera decoration member and at which the force release portion is not disposed. That is, the force release portion is a position at which the camera decoration member is most likely to deform when the camera decoration member is subject to an external force. Therefore, when the camera decoration member is subject to an external force due to a working condition such as falling of the rear cover assembly, a position of the force release portion first deforms under an action of the external force. Deformation of the force release portion can dissipate energy of the external force. This reduces a risk that a position other than the position of the force release portion deforms. That is, this reduces a risk that a position used to mount the functional device deforms, improves mounting reliability of the functional device, and reduces a risk, which affects reliability of the battery, that the functional device and the camera decoration member deform toward a direction of the battery.

It should be understood that the foregoing general description and the following detailed description are merely examples, and are not intended to limit this application.

### BRIEF DESCRIPTION OF DRAWINGS

FIG. 1 is a diagram of a structure of an electronic device in a specific embodiment according to this application;
FIG. 2 is a part of a sectional view in an A-A direction in FIG. 1;
FIG. 3 is a local view of a top view in FIG. 1;
FIG. 4 is a part of a sectional view of a rear cover assembly in an A-A direction in FIG. 1;
FIG. 5 is a locally enlarged view of a part II in FIG. 4;
FIG. 6 is a locally enlarged view of a part I in FIG. 2;
FIG. 7 is a front view of FIG. 2;
FIG. 8 is a locally enlarged view of a part III in FIG. 7;
FIG. 9 is a local sectional view of an electronic device in a specific embodiment according to this application;
FIG. 10 is a diagram of a local structure of a rear cover assembly in FIG. 1 from another perspective;
FIG. 11 is an exploded view of a rear cover assembly in a specific embodiment according to this application;
FIG. 12 is a diagram of a structure of a second outer decoration member in FIG. 11 in a specific embodiment;
FIG. 13 is a diagram of the structure in FIG. 12 from another perspective;
FIG. 14 is a part of the sectional view of the electronic device in the A-A direction in FIG. 1 in another specific embodiment; and
FIG. 15 is a locally enlarged view of a part IV in FIG. 14.

### Reference numerals:

11: rear cover;
   113: through hole;
12: camera decoration member;
   121: first mounting portion;
   122: second mounting portion;
      122a: mounting hole;
   123: first outer decoration member;
   124: second outer decoration member;
   125: inner decoration member;
   126: groove;
      126a: first section;
      126b: second section;
   127: reinforcement portion;
13: support member;
   131: adhesive;
14: middle frame;
   141: barrier wall;
   141a: first end face;
   141b: second end face;
15: first accommodating cavity;
16: second accommodating cavity;

2: flexible circuit board;
3: isolation component;
4: functional device;
   41: body;
   42: base;
5: primary camera; and
6: battery.

The accompanying drawings herein are incorporated into this specification and constitute a part of this specification, to show embodiments in accordance with this application, and are used, together with this specification, to explain the principle of this application.

### DESCRIPTION OF EMBODIMENTS

Currently, a development direction of an electronic device is toward lightness, thinness, and a long battery life. To be specific, a thickness of the electronic device is required to be smaller, and a capacity of a battery is required to be larger. On a premise that the thickness of the electronic device is small, a length or a width of the battery needs to be increased to increase the capacity of the battery. Usually, the length of the battery is increased to increase the capacity of the battery. The electronic device further includes a camera decoration member that is configured to mount a camera and a functional device of the camera. Usually, the camera decoration member and a battery compartment that is configured to accommodate the battery are arranged in a length direction of the electronic device. The camera decoration member and the battery compartment jointly occupy space in the length direction of the electronic device. When a length of the camera decoration member is increased, a length of the battery compartment is decreased. When the length of the battery compartment is increased, the length of the camera decoration member is decreased. Therefore, the camera decoration member and the battery cannot be both increased in a manner of arranging the camera decoration member and the battery compartment for the existing electronic device.

To resolve the foregoing technical problem, in this application, a part of the camera decoration member configured to mount the camera and the functional device is extended in the length direction of the electronic device, so that a projection of the camera decoration member in a thickness direction of the electronic device covers a part of the battery compartment. In this way, when the length of the camera decoration member is increased, the length of the battery compartment is not reduced, that is, the capacity of the battery is not reduced. In this case, a projection, in the thickness direction of the electronic device, of the functional device mounted on the camera decoration member partially overlaps a projection of the battery in the thickness direction. In a working condition such as falling of the electronic device, there is a risk that the functional device and the camera decoration member move toward the battery compartment. Consequently, there is a risk that reliability of the battery deteriorates due to contact of the functional device or the camera decoration member with the battery. In this application, the risk, existing when the functional device and the camera decoration member are subject to an external force, that the functional device and the camera decoration member move toward the battery is reduced in a plurality of manners. The manners include but are not limited to increasing reliability that the camera decoration member supports the functional device, buffering the external force applied to the camera decoration member, and increasing overall strength of the camera decoration member.

To better understand technical solutions of this application, the following describes embodiments of this application in detail with reference to the accompanying drawings.

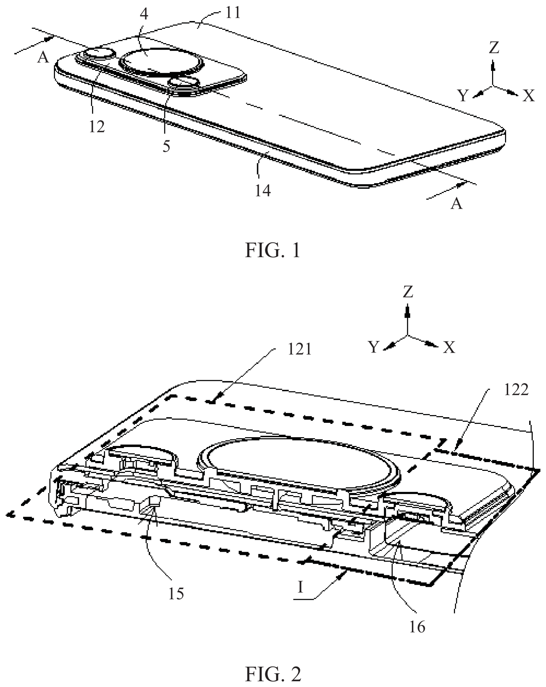

FIG. 1 is a diagram of a structure of an electronic device in a specific embodiment according to this application. FIG. 2 is a part of a sectional view in an A-A direction in FIG. 1. As shown in FIG. 1 and FIG. 2, an embodiment of this application provides an electronic device. The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

As shown in FIG. 1, the electronic device includes components such as a housing, a battery, a mainboard, and a screen. The mainboard is configured to control the components such as the screen and the battery, and the battery is configured to supply power to the components such as the screen and the mainboard. The housing includes a middle frame 14 and a rear cover assembly, and the rear cover assembly includes a rear cover 11. The screen and the rear cover 11 are mounted at two ends of the middle frame 14 in a thickness direction Z of the rear cover assembly. The rear cover 11, the middle frame 14, and the screen enclose an accommodating cavity for accommodating the components such as the battery and the mainboard. The thickness direction Z of the rear cover assembly in this embodiment of this application is the same as a thickness direction of the electronic device.

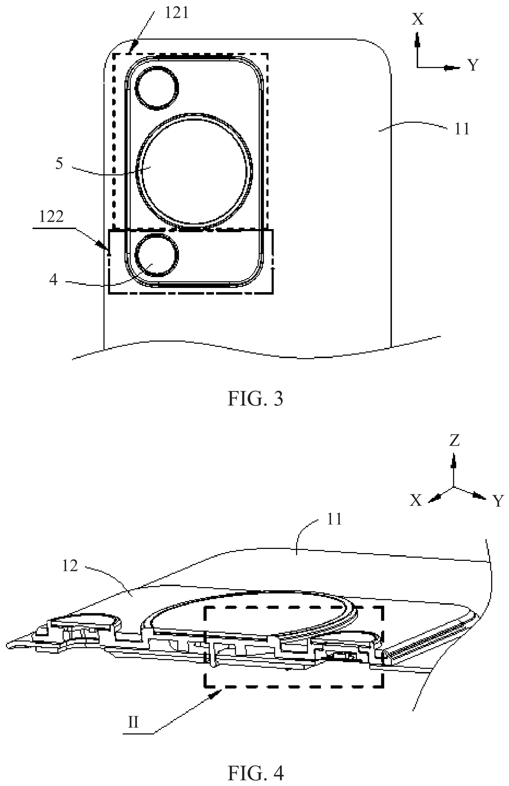

An embodiment of this application further provides a rear cover assembly of the electronic device. FIG. 3 is a local view of a top view in FIG. 1. As shown in FIG. 3, the rear cover assembly further includes a camera decoration member 12 mounted on the rear cover 11. The camera decoration member 12 is configured to mount a camera (for example, a primary camera 5) of the electronic device and another related component. For example, the camera decoration member 12 may be further configured to mount a functional device 4. The functional device 4 may be a component such as a flash, a micro-camera, or a laser focusing device. The functional device 4 may be a device whose weight is less than that of the primary camera 5. The functional device 4 is mounted on a side that is of the primary camera 5 and that is close to the battery.

As shown in FIG. 2, the middle frame 14, the rear cover 11, and the screen enclose a first accommodating cavity 15 and a second accommodating cavity 16 that are distributed in a length direction X of the rear cover assembly. The first accommodating cavity 15 is configured to accommodate the component such as the mainboard of the electronic device, and the second accommodating cavity 16 is configured to accommodate the component such as the battery of the electronic device. That is, the second accommodating cavity 16 is the battery compartment described above. Usually, a size of the second accommodating cavity 16 in the length direction X of the rear cover assembly is greater than a size of the first accommodating cavity 15 in the length direction X of the rear cover assembly, to increase a capacity of the battery as much as possible. The length direction X of the rear cover assembly in this embodiment of this application is the same as a length direction X of the electronic device.

With reference to FIG. 2 and FIG. 3, the camera decoration member 12 includes a second mounting portion 122 configured to mount the functional device 4 and a first mounting portion 121 configured to mount the camera. The first mounting portion 121 and the second mounting portion 122 are distributed in the length direction X of the rear cover assembly. In the embodiments shown in FIG. 2 and FIG. 3, the second mounting portion 122 is a part of the camera decoration member 12 in a dash-dot-line box, and the first mounting portion 121 is a part of the camera decoration member 12 in a dash-line box. The first mounting portion 121 may be a part that is of the camera decoration member 12 and that is located above the first accommodating cavity 15, and the second mounting portion 122 may be a part that is of the camera decoration member 12 and that is located above the second accommodating cavity 16. That is, a projection of the first mounting portion 121 in a thickness direction Z of the rear cover assembly falls into the first accommodating cavity 15, and a projection of the second mounting portion 122 in the thickness direction Z of the rear cover assembly falls into the second accommodating cavity 16.

In conclusion, in the embodiments shown in FIG. 2 and FIG. 3, in the rear cover assembly, the camera decoration member 12 extends in the length direction X of the rear cover assembly, so that the second mounting portion 122 in the camera decoration member 12 extends to above the second accommodating cavity 16 configured to accommodate the battery. In this way, a length of the camera decoration member 12 is increased as much as possible, and space for mounting the camera and the functional device of the camera is increased while a length of the second accommodating cavity 16 is not reduced. This helps increase a volume of the camera of the electronic device.

The second mounting portion 122 of the camera decoration member 12 may be configured to mount the functional device 4 whose weight and volume are both less than those of the primary camera 5. A risk that the functional device 4 with a small weight and volume move toward the battery is low when the functional device 4 is subject to an external force. This reduces impact on reliability of the battery.

To further improve reliability of the battery and reduce a risk that external forces applied by the camera decoration member 12 and the functional device 4 to the battery affect battery safety, one manner is to increase mounting reliability of the camera decoration member 12 on the functional device 4. The following describes the manner in detail.

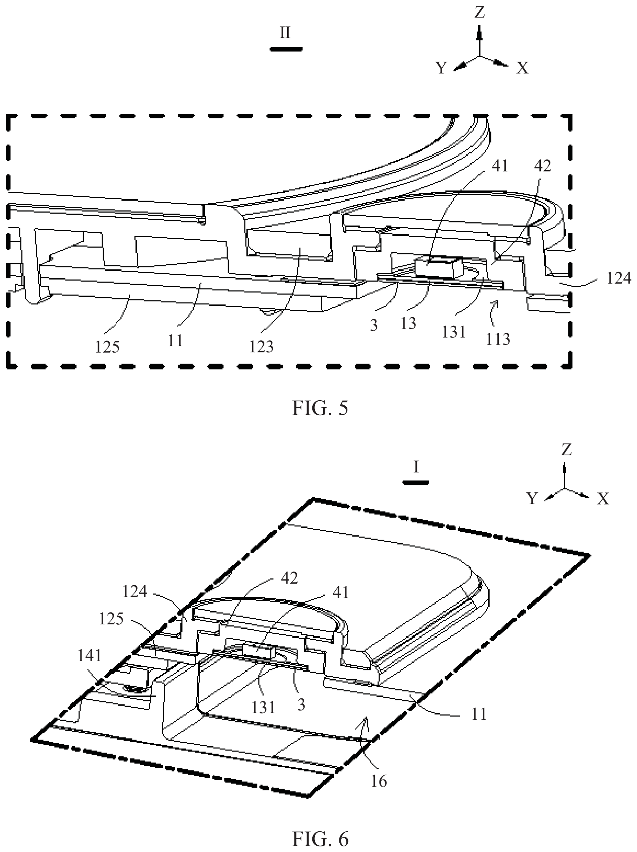

FIG. 4 is a part of a sectional view of the rear cover assembly in the A-A direction in FIG. 1. FIG. 5 is a locally enlarged view of a part II in FIG. 4. In a specific embodiment, as shown in FIG. 5, the functional device includes a body 41 and a base 42. The base 42 has mounting space for accommodating the body 41. The functional device 4 is mounted on the second mounting portion 122 of the camera decoration member 12 via the base 42, and the base 42 is configured to protect the body 41. The functional device 4 may be a flash. In a specific embodiment, the rear cover assembly may further include a support member 13. The support member 13 is located between the body 41 and the rear cover 11 in the thickness direction Z of the rear cover assembly, and the support member 13 is fastened to the base 42 of the functional device 4.

In the embodiment shown in FIG. 5, a fastening connection between the support member 13 and the base 42 of the functional device 4 may be implemented through adhesive 131. That is, the support member 13 is bonded to the base 42 through the adhesive 131. A thickness of the adhesive 131 may be from 0.15 mm to 0.3 mm. For example, the thickness of the adhesive 131 may be 0.15 mm, 0.18 mm, 0.19 mm, 0.2 mm, 0.21 mm, 0.25 mm, 0.3 mm, or the like. In this embodiment, the adhesive 131 can implement the fastening connection between the support member 13 and the base 42, and can implement a specific buffering function. That is, the adhesive 131 can buffer an external force between the base 42 and the support member 13. This reduces the external force applied to the body 41 of the functional device 4 by the support member 13, and improves safety and a service life of the body.

FIG. 6 is a locally enlarged view of a part I in FIG. 2. With reference to FIG. 5 and FIG. 6, in a specific embodiment, the support member 13 is located between the body 41 of the functional device 4 and the second accommodating cavity 16 in the thickness direction Z of the rear cover assembly. That is, the support member 13 separates the body 41 of the functional device 4 from the battery in the second accommodating cavity 16. In this embodiment, the support member 13 can be configured to support the functional device 4. This improves mounting reliability of the camera decoration member 12 on the functional device 4, and reduces a risk that the functional device 4 moves toward the second accommodating cavity 16 in the thickness direction Z of the rear cover assembly under an action of an external force. In this way, a risk that the functional device 4 affects reliability of the battery in the second accommodating cavity 16 is reduced. In addition, the support member 13 in this embodiment supports the body 41 of the functional device 4, and also may extend to below of the base 42 of the functional device 4, and is fastened to the base 42, to support the body 41 and the base 42 of the functional device 4. This further improves reliability of supporting the functional device 4 and further improves reliability of mounting the functional device 4 on the camera decoration member 12.

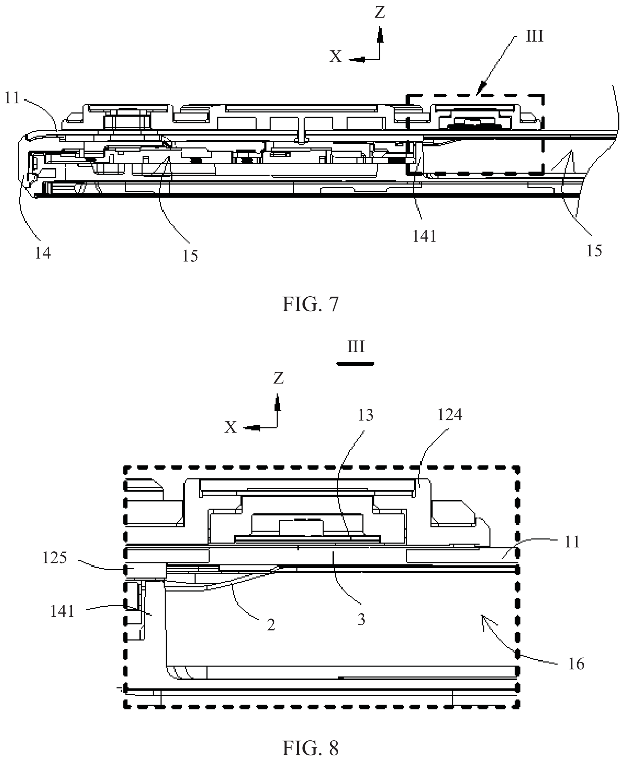

In another specific embodiment, FIG. 7 is a front view of FIG. 2, and FIG. 8 is a locally enlarged view of a part III in FIG. 7. As shown in FIG. 7 and FIG. 8, the middle frame 14 may include a barrier wall 141. The barrier wall 141 is located between the first accommodating cavity 15 and the second accommodating cavity 16, and is configured to separate a component in the first accommodating cavity 15 from a component in the second accommodating cavity 16. This prevents a defect such as a short circuit caused by contact between the components in the two accommodating cavities. The barrier wall 141 extends in the thickness direction Z of the rear cover assembly, and is configured to support the rear cover assembly, which reduces a risk that the rear cover assembly and components (for example, the primary camera head 5 and the functional device 4) mounted on the rear cover assembly move toward the inside of the accommodating cavity or deform. This reduces a risk of damaging the component in the accommodating cavity. In the embodiment shown in FIG. 8, when the second mounting portion 122 of the camera decoration member 12 extends toward a direction of the second accommodating cavity 16, the barrier wall 141 supports the rear cover assembly. This can reduce a risk that the second mounting portion 122 and the functional device 4 mounted on the second mounting portion 122 move toward the second accommodating cavity 16, to reduce impact on reliability of the battery located in the second accommodating cavity 16.

In a specific embodiment, the barrier wall 141 may be bonded to the rear cover assembly. This further improves reliability that the barrier wall 141 supports the rear cover assembly, and further reduces a risk that the rear cover assembly and the functional device 4 mounted on the rear cover assembly move toward the battery under an action of an external force. In addition, an adhesive material that bonds the rear cover assembly and the barrier wall 141 can further buffer an impact force between the barrier wall 141 and the rear cover assembly.

In the embodiment shown in FIG. 6, that the barrier wall 141 is bonded to the rear cover assembly may be specifically that the barrier wall 141 is bonded to the rear cover 11. Alternatively, in the embodiment shown in FIG. 8, the camera decoration member 12 may include an outer decoration member and an inner decoration member 125. The inner decoration member 125 is located in the first accommodating cavity, the outer decoration member is located on an outer side of the first accommodating cavity, and both the inner decoration member 125 and the inner decoration member are connected to the rear cover 11. In this case, the barrier wall 141 may be bonded to the inner decoration member 125.

In still another specific embodiment, as shown in FIG. 6 and FIG. 8, in the electronic device, a part of a structure that is of the camera decoration member 12 and that is configured to mount the functional device 4 extends, in the length direction X, to above the second accommodating cavity 16 configured to mount the battery. In this way, the length of the second accommodating cavity 16 is not reduced while the length of the camera decoration member is increased. This helps implement a large camera and a long battery life for the electronic device. The support member 13 is disposed between the functional device 4 and the second accommodating cavity 16, and the support member 13 is connected to the base 42 of the functional device 4. This reduces a risk that reliability of the battery deteriorates because the functional device 4 moves toward the second accommodating cavity 16 when the functional device 4 is subject to an external force. In addition, the barrier wall 141 of the middle frame 14 of the electronic device extends in the thickness direction Z of the rear cover assembly until the barrier wall 141 abuts against the rear cover assembly. In this way, the rear cover assembly is supported via the barrier wall 141. This reduces a risk that reliability of the battery deteriorates because the rear cover assembly moves toward the second accommodating cavity 16 when the rear cover assembly is subject to an external force. Therefore, in this embodiment, under an action of support of the support member 13 and the barrier wall 141, the risk that reliability of the battery deteriorates can be reduced.

In a specific embodiment, as shown in FIG. 6 and FIG. 8, the camera decoration member may include an inner decoration member 125 and an outer decoration member (for example, include at least a second outer decoration member 124). The outer decoration member extends to above the second accommodating cavity 16 in the length direction X of the rear cover assembly. That is, an edge of the outer decoration member exceeds an edge of the inner decoration member 125 in the length direction X of the rear cover assembly. In this way, the length of the second accommodating cavity 16 is not reduced while the length of the camera decoration member is increased. This helps implement the large camera and the long battery life for the electronic device.

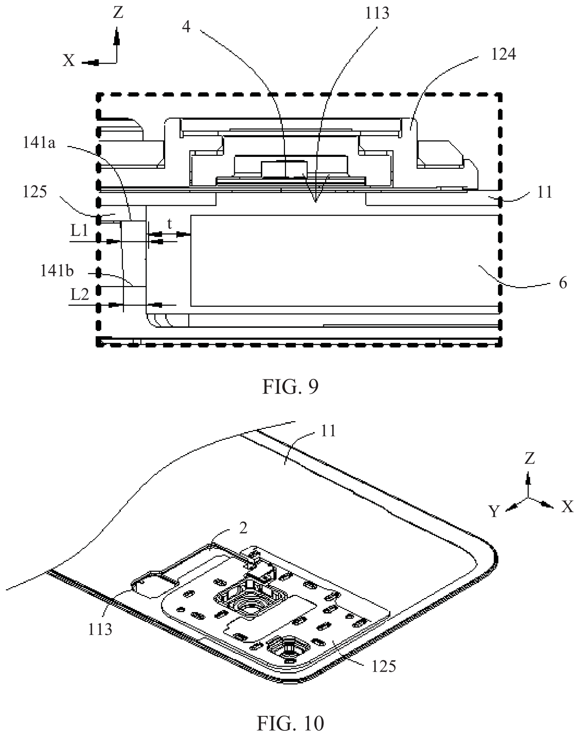

FIG. 9 is a local sectional view of the electronic device in a specific embodiment according to this application. The barrier wall 141 has a first end face 141a abutting against the rear cover assembly. A size L1 of the first end face 141a in the length direction X of the rear cover assembly meets 0.5 mm ≤ L1 ≤ 1.5 mm. For example, L1 may be 0.5 mm, 0.8 mm, 0.9 mm, 1 mm, 1.1 mm, 1.2 mm, 1.5 mm, or the like.

In this embodiment, when L1 is excessively small, a contact area between the barrier wall 141 and the rear cover assembly is excessively small, and the rear cover assembly and/or the middle frame 14 are/is subject to external forces, stress at a position at which the first end face 141a is in contact with the rear cover assembly is excessively large, the barrier wall 141 has a risk of being damaged, reliability that the barrier wall 141 supports the rear cover assembly is poor, and a possibility that reliability of the battery deteriorates cannot be effectively reduced. When L1 is excessively large, a size occupied by the barrier wall 141 in the length direction X of the rear cover assembly is excessively large, which affects the size of the first accommodating cavity 15 and the size of the second accommodating cavity 16 in the length direction X. When 0.5 mm ≤ L1 ≤ 1.5 mm, the contact area between the barrier wall 141 and the rear cover assembly is moderate, so that reliability that the barrier wall 141 supports the rear cover assembly is good, and a length of the first accommodating cavity 15 and the length of the second accommodating cavity 16 are not significantly reduced.

In a specific embodiment, as shown in FIG. 9, the barrier wall 141 further has a second end face 141b disposed opposite to the first end face 141a. A size L2 of the second end face 141b is less than the size L1 of the first end face 141a in the length direction X of the rear cover assembly. In this way, an overall weight and volume of the barrier wall 141 are reduced while the contact area between the barrier wall 141 and the rear cover assembly is increased, which helps implement lightweight of the electronic device.

Specifically, in the thickness direction Z of the rear cover assembly and a direction from the screen to the rear cover assembly, a size of the barrier wall 141 in the length direction X of the rear cover assembly is gradually increased. That is, a longitudinal section of the barrier wall 141 may be an inverted trapezoidal structure.

In a specific embodiment, as shown in FIG. 9, the second accommodating cavity of the electronic device accommodates a battery 6, there is a gap t between the battery 6 and the inner decoration member 125 in the length direction X of the rear cover assembly, and the gap t meets 0.4 mm ≤ t ≤ 1 mm. For example, the gap t may be specifically 0.4 mm, 0.5 mm, 0.55 mm, 0.6 mm, 0.8 mm, 1 mm, or the like.

In this embodiment, when the gap t between the battery 6 and the inner decoration member 125 is excessively small, and when the electronic device is used, there is a risk that reliability of the battery is affected because the inner decoration member 125 is in contact with the battery 6. When the gap t between the battery 6 and the inner decoration member 125 is excessively large, the size of the second accommodating cavity in the length direction X of the rear cover assembly is reduced, and a capacity of the battery 6 is affected. When 0.4 mm ≤ t ≤ 1 mm, the capacity of the battery 6 can be increased as much as possible while contact between the inner decoration member 125 and the battery 6 is prevented.

FIG. 10 is a diagram of a local structure of the rear cover assembly in FIG. 1 from another perspective. In the embodiment shown in FIG. 10, a through hole 113 is disposed at a position that is on the rear cover and that is used to enclose the second accommodating cavity 16. The through hole 113 is used for a flexible circuit board 2 to pass through. One end of the flexible circuit board 2 is connected to the functional device 4, and the other end of the flexible circuit board 2 can extend to the first accommodating cavity 15 through the through hole 113 and be connected to the mainboard in the first accommodating cavity 15. The through hole 113 may be of a structure that adapts to the flexible circuit board 2. A part of the flexible circuit board 2 is located in the through hole 113, that is, the part of the flexible circuit board 2 is embedded in the rear cover 11. This prevents the flexible circuit board 2 from extending to the second accommodating cavity 16.

In a specific embodiment, as shown in FIG. 5 and FIG. 6, the electronic device may further include an isolation component 3. The isolation component 3 is located between the second accommodating cavity 16 and the support member 13 in the thickness direction Z of the rear cover assembly. This separates the support member 13 from the battery in the second accommodating cavity 16. The isolation component 3 may be foam. When the through hole 113 shown in FIG. 10 is disposed on the rear cover 11, the isolation component 3 covers at least a part of the through hole 113. This separates the flexible circuit board 2 located in the through hole 113 from the battery in the second accommodating cavity 16, which improves reliability of the battery.

In the embodiment shown in FIG. 8, the isolation component 3 may include foam. The foam is located in the through hole, and does not occupy space outside the through hole. In this way, the volume of the second accommodating cavity 16 is not reduced although the foam is disposed, which helps increase the capacity of the battery.

In a specific embodiment, as shown in FIG. 9, the isolation component 3 may further include graphite located between the functional device 4 and the battery, to separate the functional device 4 from the battery.

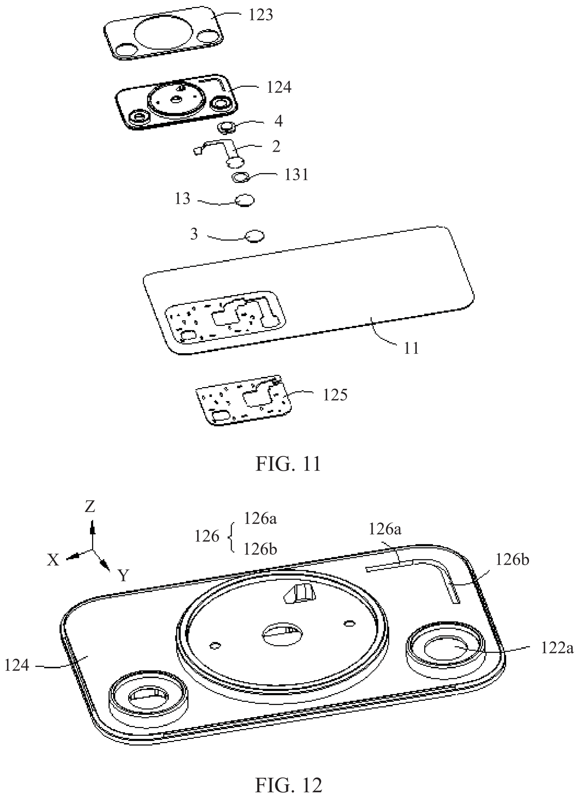

In a specific embodiment, FIG. 11 is an exploded view of the rear cover assembly in a specific embodiment according to this application. With reference to FIG. 5 and FIG. 11, the camera decoration member 12 may include the outer decoration member and the inner decoration member 125. The inner decoration member 125 is located on an inner side of the rear cover 11. That is, the inner decoration member 125 encloses a top wall of the first accommodating cavity 15. The outer decoration member is located on an outer side of the rear cover 11. In the thickness direction of the rear cover assembly, the inner decoration member 125 and the outer decoration member are located on two sides of the rear cover 11, and the outer decoration member passes through the rear cover 11 and is connected to the inner decoration member 125. In this way, the camera decoration member 12 is connected to the rear cover 11. In the embodiments shown in FIG. 5 and FIG. 11, the inner decoration member 125, the outer decoration member, and the rear cover 11 may be detachably connected via structures such as a screw and a buckle. In addition, a connection manner in which the inner decoration member 125 and the outer decoration member clamp the rear cover 11 has an advantage of high connection reliability.

With reference to FIG. 5 and FIG. 8, when the camera decoration member includes the outer decoration member and the inner decoration member 125, a length of the inner decoration member 125 is less than a length of the outer decoration member in the length direction X of the rear cover assembly. That is, the outer decoration member extends to above the first accommodating cavity 15 in the length direction X of the rear cover assembly. The inner decoration member 125 is configured to enclose the first accommodating cavity 15. That is, the inner decoration member 125 does not extend toward the second accommodating cavity 16. In this way, space of the second accommodating cavity 16 is not occupied, which helps increase the capacity of the battery. In the embodiment shown in FIG. 8, the barrier wall 141 of the middle frame abuts against the inner decoration member 125.

In the embodiment shown in FIG. 11, the outer decoration member may further include a first outer decoration member 123 and a second outer decoration member 124. The second outer decoration member 124 is connected to the rear cover 11. The first outer decoration member 123 is connected to a side that is of the second outer decoration member 124 and that is away from the rear cover 11, and the first outer decoration member 123 is configured to protect the second outer decoration member 124.

In another embodiment, the camera decoration member may include only the outer decoration member, and does not include the inner decoration member. The outer decoration member is fastened to the outer side of the rear cover 11. The camera decoration member in this embodiment has an advantage of a simple structure. Therefore, a specific structure of the camera decoration member is not limited in this application.

To further improve reliability of the battery and reduce a risk that external forces applied by the camera decoration member and the functional device to the battery affect battery safety, another manner is to reduce a deformation amount of the camera decoration member at a position at which the functional device is mounted when the camera decoration member is subject to an external force. The following describes the manner in detail.

A force release portion is disposed on the camera decoration member. Rigidity of the force release portion is less than rigidity of a position that is on the camera decoration member and at which the force release portion is not disposed. That is, the force release portion is a position at which the camera decoration member is most likely to deform when the camera decoration member is subject to an external force. Therefore, when the camera decoration member is subject to an external force due to a working condition such as falling of the electronic device, a position of the force release portion first deforms under an action of the external force. Deformation of the force release portion can dissipate energy of the external force. This reduces a risk that a position other than the position of the force release portion deforms. That is, this reduces a risk that a position used to mount the functional device deforms, improves mounting reliability of the functional device, and reduces a risk, which affects reliability of the battery, that the functional device and the camera decoration member deform toward a direction of the battery. The force release portion with small rigidity may be implemented in the following manners: In a first manner, an elastic modulus of a material of the force release portion is less than an elastic modulus at another position of the camera decoration member; and in a second manner, the force release portion is a groove disposed on the camera decoration member, and a thickness of a bottom wall of the groove is less than a thickness of the camera decoration member at another position.

In a specific embodiment, FIG. 12 is a diagram of a structure of the second outer decoration member in FIG. 11 in a specific embodiment. As shown in FIG. 12, a mounting hole 122a configured to mount the functional device is disposed on the second outer decoration member 124, and the mounting hole 122a extends to above the second accommodating cavity. A groove 126 is disposed on the second outer decoration member 124, and the groove 126 is the foregoing force release portion. When the camera decoration member is subject to an external force, compared with a position of the mounting hole 122a, the second outer decoration member 124 is more likely to deform at a position of the groove 126. This reduces a risk that the position of the mounting hole 122a deforms when the position of the mounting hole 122a is subject to an external force, and reduces a risk that reliability of the battery is affected because the functional device mounted in the mounting hole 122a deforms toward the direction of the battery.

In the embodiment shown in FIG. 12, the groove 126 includes at least a first section 126a extending in the length direction X of the rear cover assembly and a second section 126b extending in a width direction Y of the rear cover assembly. The first section 126a and the second section 126b can buffer, in two directions, the external force applied to the camera decoration member, which further reduces a risk that the position of the mounting hole 122a deforms. The width direction Y of the rear cover assembly in this embodiment of this application is the same as a width direction of the electronic device.

The groove 126 in this embodiment may be a structure that penetrates the second outer decoration member 124 in the thickness direction. When the second outer decoration member 124 is connected to the first outer decoration member 123, the first outer decoration member 123 can cover the groove 126. This maintains appearance integrity of the camera decoration member, achieves good appearance effect for the camera decoration member, and reduces a risk that an impurity enters the camera decoration member through the groove 126.

In another embodiment, when the camera decoration member is of an integrated structure, the groove may be disposed on an inner wall of the integrated camera decoration member. Therefore, a specific structure of the camera decoration member is not limited in this application.

To improve reliability of the battery and reduce a risk that external forces applied by the camera decoration member and the functional device to the battery affect battery safety, another manner is to enhance an overall structure of the camera decoration member, to improve mounting reliability of the camera decoration member on the functional device. The following describes the manner in detail.

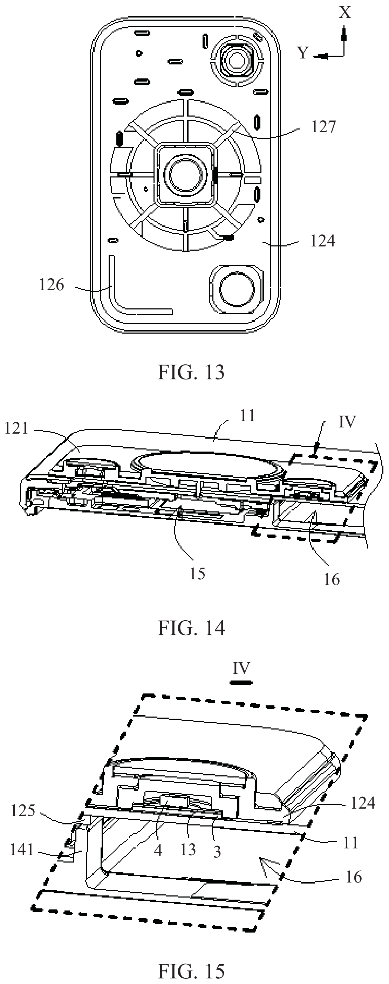

In a specific embodiment, FIG. 13 is a diagram of the structure in FIG. 12 from another perspective. In this embodiment, a reinforcement portion 127 may be disposed on the second outer decoration member 124. The reinforcement portion 127 is in an asterisk shape. This increases strength of the second outer decoration member 124 in various directions, and reduces a risk that the second outer decoration member 124 deforms under an action of an external force.

When the second outer decoration member 124 is connected to the first outer decoration member 123, the first outer decoration member 123 can cover the reinforcement portion 127. This achieves good appearance effect for the camera decoration member.

In another embodiment, when the camera decoration member is of the integrated structure, the reinforcement portion 127 may be disposed on the inner wall of the integrated camera decoration member. Therefore, a specific structure of the camera decoration member is not limited in this application.

FIG. 14 is a part of the sectional view of the electronic device in the A-A direction in FIG. 1 in another specific embodiment. FIG. 15 is a locally enlarged view of a part IV in FIG. 14.

In the embodiments shown in FIG. 14 and FIG. 15, no through hole is disposed at a position that is on the rear cover 11 and at which the functional device 4 is mounted. That is, the functional device 4 is separated from the second accommodating cavity 16 via the rear cover 11. By using the rear cover 11, this can reduce a risk, which affects reliability of the battery, that the functional device 4 enters the second accommodating cavity 16 under an action of an external force. In this embodiment, the through hole used for the flexible circuit board (not shown in FIG. 14 and FIG. 15) to pass through may be disposed on the rear cover 11, and the flexible circuit board extends to the first accommodating cavity through the through hole disposed on the rear cover 11 and is connected to the mainboard in the first accommodating cavity. In addition, when the camera decoration member 12 includes the inner decoration member 125, a through hole may also be disposed on the inner decoration member 125. In this way, the flexible circuit board extends to the first accommodating cavity through the through hole disposed on the rear cover 11 and the through hole on the inner decoration member 125.

In the embodiments shown in FIG. 14 and FIG. 15, except that no through hole is disposed on the rear cover 11, other structures are the same as those in the embodiments shown in FIG. 1 to FIG. 13. Details are not described herein again.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. An electronic device, wherein the electronic device comprises:
a housing, wherein the housing comprises a middle frame and a rear cover assembly, the rear cover assembly comprises a rear cover and a camera decoration member mounted on the rear cover, and the middle frame is connected to the rear cover;
a functional device and a camera that are mounted on the camera decoration member; and
a battery and a mainboard, wherein
the housing has a first accommodating cavity configured to accommodate the mainboard and a second accommodating cavity configured to accommodate the battery, the camera decoration member comprises a first mounting portion configured to mount the camera and a second mounting portion configured to mount the functional device, and the second mounting portion extends to above the second accommodating cavity; and
the middle frame comprises a barrier wall, the barrier wall is located between the first accommodating cavity and the second accommodating cavity, and the barrier wall supports the rear cover assembly.

2. The electronic device according to claim 1, wherein the barrier wall is bonded to the rear cover assembly.

3. The electronic device according to claim 1, wherein the barrier wall has a first end face supporting the rear cover assembly, a size of the first end face in a length direction of the electronic device is L1, and 0.5 mm ≤ L1 ≤ 1.5 mm.

4. The electronic device according to claim 3, wherein the barrier wall has a second end face disposed opposite to the first end face, and the size L1 of the first end face is greater than a size L2 of the second end face in the length direction of the electronic device.

5. The electronic device according to any one of claims 1 to 4, wherein the functional device comprises a base and a body mounted on the base, and the base is mounted on the camera decoration member; and
the rear cover assembly further comprises a support member, wherein the support member is located between the body and the rear cover, and is fastened to the base.

6. The electronic device according to claim 5, wherein the support member is bonded to the base through adhesive, and a thickness of the adhesive is from 0.15 mm to 0.3 mm.

7. The electronic device according to any one of claims 1 to 6, wherein a force release portion is disposed on the camera decoration member.

8. The electronic device according to claim 7, wherein the force release portion is a groove disposed on the camera decoration member.

9. The electronic device according to claim 8, wherein the groove comprises at least a first section extending in the length direction of the electronic device and a second section extending in a width direction of the electronic device.

10. The electronic device according to any one of claims 1 to 9, wherein a reinforcement portion is disposed on the camera decoration member.

11. The electronic device according to any one of claims 1 to 10, wherein the camera decoration member comprises an inner decoration member and an outer decoration member, an edge of the outer decoration member exceeds an edge of the inner decoration member in the length direction of the electronic device, a part of the outer decoration member extends to above the second accommodating cavity, and the inner decoration member is located in the first accommodating cavity.

12. The electronic device according to claim 11, wherein there is a gap t between the inner decoration member and the battery in the length direction of the electronic device, and 0.4 mm ≤ t ≤ 1 mm.
